# EUROPEAN PATENT SPECIFICATION

(11) **EP 2 980 388 B1**
(45) Date of publication and mention of the grant of the patent: **21.03.2018**
(21) Application number: 15746693.9
(22) Date of filing: 30.01.2015
(51) Int. Cl.: B60W 30/18, F02D 29/02, F02D 41/02

(54) **DRIVE CONTROL DEVICE**
ANTRIEBSSTEUERUNGSVORRICHTUNG
DISPOSITIF DE COMMANDE D'ENTRAÎNEMENT

(30) Priority: 04.02.2014 JP 2014019404
(43) Date of publication of application: 03.02.2016
(73) Proprietor: Suzuki Motor Corporation, Hamamatsu, Shizuoka 432-8611 (JP)
(72) Inventor: SAITO Masatoshi, Hamamatsu-shi Shizuoka 432-8611 (JP); MAEDA Sadaharu, Hamamatsu-shi Shizuoka 432-8611 (JP)
(74) Representative: Henkel, Breuer & Partner
(86) International application number: PCT/JP2015/052731
(87) International publication number: WO 2015/119061

(56) References cited:
- EP-A1- 1 584 832
- EP-A2- 1 342 607
- EP-A2- 1 428 716
- EP-A2- 1 637 720
- EP-A2- 1 691 061
- CN-A- 103 029 708
- DE-A1- 10 024 704
- JP-A- H06 221 209
- JP-A- 2002 096 658
- JP-A- 2004 116 748
- JP-B2- 3 355 679

## Description

### Technical Field

The present invention relates to a drive control device. Especially, the present invention relates to a drive control device for executing a creep control that increases a torque in order to assist the start at the time of the start of a vehicle.

### Background Art

Conventionally, in a manual transmission that transmits a driving force of an engine mounted on a vehicle through a clutch, there is known an automated manual transmission (AMT) that includes an actuator for automatically executing an engagement and disengagement operation of the clutch or a shift operation.

Further, in the automated manual transmission (hereinafter, referred to as "AMT"), there is known a technology that is adapted to secure startability by executing a creep control at the time of the start of a vehicle.

As a technology for executing the creep control of the AMT, a drive control device is disclosed in JP 2002-096658A. This drive control device causes a clutch to be slip-engaged when a brake release operation is detected. In this way, a driving force is transmitted, and thus, a vehicle is driven.

JP 3 355679B2 discloses a drive control device for a creep control of an automated manual transmission which is based on a decrease of an increasing amount of a target engine rotational speed according to an acceleration rate of the vehicle detected by an acceleration rate detection unit. EP 1 428 716 A2 starts the creep control upon the start of the engagement of the clutch and compares the engine speed with a permissible upper limit speed.

### Summary of Invention

### Problems to be Solved by Invention

By the way, the AMT does not include a torque converter, unlike an automatic transmission (AT). Therefore, in such AMT, a creep control is executed on the basis of a creep torque including a torque or the like for starting a vehicle. At this time, it is necessary to generate a creep torque of a torque demand amount in an engine. In the creep control, the creep torque generated in the engine is transmitted to a driving wheel by causing a clutch to be slip-engaged (semi-connected state), thereby assisting the start of the vehicle.

However, under the condition that the torque demand amount for the creep torque is small, for example, in the case where an engine rotational speed at the time of the actuation of the creep control is greater than a target engine rotational speed, an excessive torque up of an engine is caused when the creep control is executed by a predefined creep torque that is predetermined. As a result, there is a possibility that the engine rotational speed is increased, and hence, a fuel consumption performance or drivability is degraded.

Therefore, the present invention aims to execute the creep control based on a correction amount that is obtained by correcting a demand amount of the creep torque, under the condition that the demand amount for the creep torque is small.

### Means for solving the problems

The present invention provides a drive control device with the features of claim 1 for executing a creep control based on a torque demand amount of a creep torque. The drive control device includes a control unit configured to execute the creep control based on a predefined torque demand amount when a request for actuation of the creep control is detected; and a detection unit configured to detect an engine rotational speed of a vehicle. The control unit is configured to, when the engine rotational speed detected by the detection unit, at a time when an OFF signal of a brake actuation is received, is greater than a target engine rotational speed, start, after reducing the predefined torque demand in accordance with a deviation between the engine rotational speed at the time when the OFF signal of the brake actuation is received and the target rotational speed to obtain a correction amount, the creep control based on the correction amount.

### Effects of Invention

The present invention can suppress an increase in an engine rotational speed due to the excessive torque up of an engine, so that a stable fuel consumption performance and drivability can be secured.

### Brief Description of Drawings

Fig. 1 is a system configuration diagram of a drive control device. (Embodiment)
Fig. 2 is a view showing an input signal and an output signal of the drive control device. (Embodiment)
Fig. 3 is a flow chart of a creep control of the drive control device. (Embodiment)
Fig. 4 is a time chart of the creep control of the drive control device. (Embodiment)

### Embodiment for carrying out Invention

Hereinafter, an embodiment of the present invention will be described with reference to the drawings.

### [Embodiment]

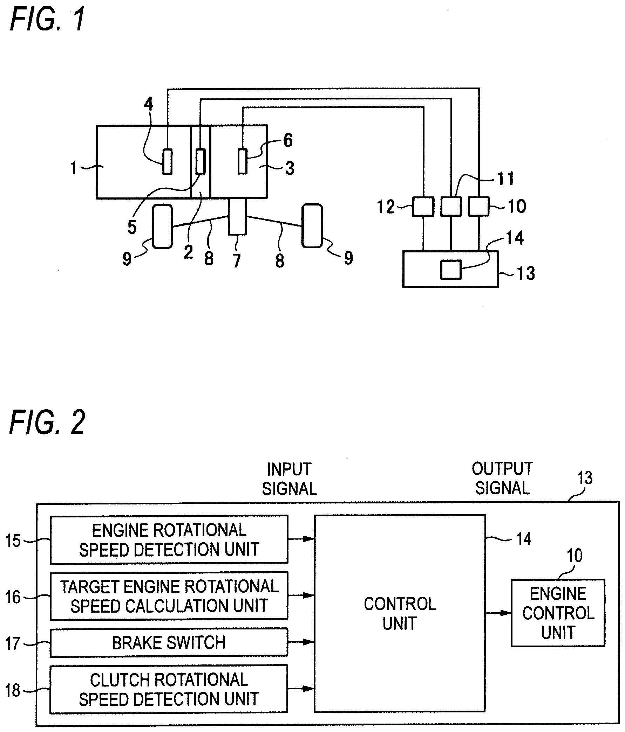

Figs. 1 to 4 show an embodiment of the present invention. In Fig. 1, an engine 1 to be mounted on a vehicle is connected to an automated manual transmission 3 (hereinafter, referred to as "AMT") through a clutch 2. In the engine 1, the amount of intake air is adjusted by an electronic control throttle valve 4. Further, in the engine 1, a driving force is generated by combustion of fuel that is supplied in accordance with the amount of intake air. The clutch 2 is configured by a friction clutch, or the like. In the clutch 2, the engagement and disengagement of transmission of the driving force is executed by a first actuator 5. The AMT 3 is configured by multi-stage gear trains having different gear ratios or a belt pulley where a gear ratio can be continuously changed, etc. Further, in the AMT 3, a shift operation is controlled by a second actuator 6, and thus, the switching of the gear ratio is executed.

The driving force generated by the engine 1 is inputted to the AMT 3 through the clutch 2 and then converted into a rotational speed and a torque, which correspond to the gear ratio. By a differential 7, the driving force outputted from the AMT 3 is transmitted to a driving wheel 9 through a drive axle 8, thereby causing the vehicle to be driven.

An engine control unit 10 controls a throttle opening degree of an electronic control throttle valve 4 and thus controls a torque that is generated by the engine 1. A clutch control unit 11 controls an operation of the first actuator 5 and thus controls the engagement and disengagement of the clutch 2. A transmission control unit 12 controls an operation of the second actuator 6 and thus controls a shift operation in the AMT 3. The engine control unit 10, the clutch control unit 11 and the transmission control unit 12 are collectively controlled by being connected to a drive control device 13 through an in-vehicle LAN such as CAN (Control Area Network).

The drive control device 13 executes a creep control based on a torque demand amount of a creep torque that includes a torque for starting a vehicle at the time of the start of the vehicle. In the creep control, the drive control device 13 controls an operation of the electronic control throttle valve 4 by the engine control unit 10 and thus causes the creep torque of the torque demand amount to be generated in the engine 1. Further, the drive control device 13 controls an operation of the first actuator 5 by the clutch control unit 11 and thus causes the clutch 2 to be slip-engaged (semi-connected state).

The drive control device 13 includes a control unit 14. The control unit 14 executes the creep control based on a predefined torque demand amount when a request for actuation of the creep control is detected. As shown in Fig. 2, the control unit 14 executes the creep control by the input of a signal related to an engine rotational speed, a signal related to a target engine rotational speed, a creep control signal and a signal related to a clutch rotational speed.

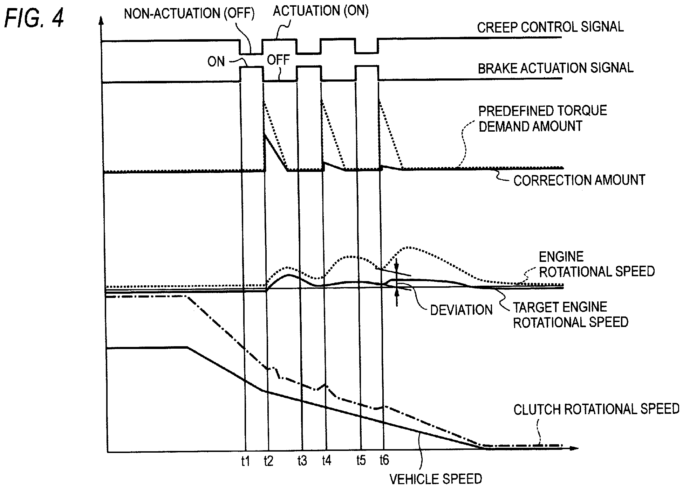

The engine rotational speed is detected by an engine rotational speed detection unit 15 provided in the engine 1. The target engine rotational speed refers to a target value of an engine rotational speed for the request torque from a driver. The target engine rotational speed is calculated by a target engine rotational speed calculation unit 16 included in the engine control unit 11, based on the throttle opening degree of the electronic control throttle valve 4, for example. The creep control signal is composed of an ON signal indicating the creep control in an actuation state and an OFF signal indicating the creep control in a non-actuation state. Further, the creep control signal can be set on the basis of a brake actuation signal of a brake switch 17. For example, the brake actuation signal is switched on when a brake is depressed and is switched off when the brake operation is released. In this case, as indicated by t1, t3 and t5 in Fig. 4, the creep control is set to the non-actuation state when the brake actuation signal is the ON signal, and the creep control is set to the actuation state when the brake actuation signal is the OFF signal. The clutch rotational speed is detected by a clutch rotational speed detection unit 18 provided in an output-side member of the clutch 2.

When the engine rotational speed detected by the engine rotational speed detection unit 15 is greater than the target engine rotational speed calculated by the target engine rotational speed calculation unit 16, the control unit 14 calculates a correction amount that is obtained by correcting a predefined torque demand amount in the creep torque. Specifically, the control unit 14 calculates a correction amount that is corrected so as to reduce the predefined torque demand amount. The control unit 14 executes the creep control by outputting the correction amount calculated to the engine control unit 10. The engine control unit 10 controls the throttle opening degree of the electronic control throttle valve 4 in accordance with the correction amount to be inputted, thereby causing the creep torque of the correction amount to be generated in the engine 1.

Next, an operation will be described.

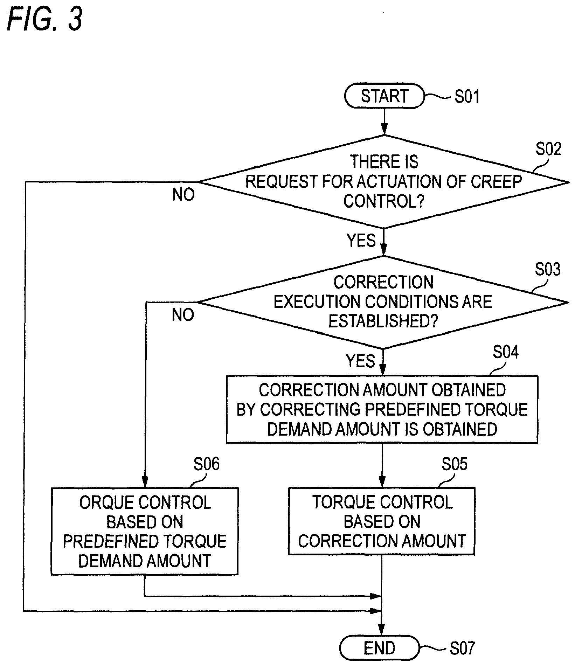

The creep control of the control unit 14 in the drive control device 13 will be described with reference to the flow chart in Fig. 3.

The control unit 14 starts a program for the creep control when receiving an ON signal of an ignition switch, for example (S01). The control unit 14 detects whether or not there is a request for actuation of the creep control (S02). Specifically, the control unit 14 detects whether or not the creep control is changed from the non-actuation state to the actuation state, i.e., whether or not the creep control signal is changed from the OFF signal to the ON signal. Further, the control unit 14 may detect whether or not the brake actuation signal is changed from the ON signal to the OFF signal.

Further, the control unit 14 may be configured to detect whether or not to receive at least one of the ON signal of the creep control signal or the OFF signal of the brake actuation signal. In this case, the control unit 14 does not check the changing state of the creep control signal and the brake actuation signal, but checks whether or not to receive a predetermined signal.

In this way, in S02, the control unit 14 detects whether or not the request for the actuation of the creep control is made.

When it is detected in S02 that there is no request for actuation of the creep control, the control unit 14 ends the creep control (S07). Specifically, the control unit 14 ends the creep control when the OFF signal of the creep control signal or the ON signal of the brake actuation signal is received.

On the other hand, when it is detected in S02 that there is a request for actuation of the creep control, the control unit 14 detects whether or not a correction execution condition for correcting a predefined torque demand amount is established (S03). Specifically, the control unit 14 detects that the correction execution condition is established when the engine rotational speed is greater than the target engine rotational speed.

When it is detected in S03 that the correction execution condition is not established, the control unit 14 controls the engine torque based on the predefined torque demand amount (S06). Specifically, when it is detected that the engine rotational speed is equal to or less than the target engine rotational speed, the control unit 14 outputs a command signal to the engine control unit 10 so as to control the engine torque based on the predefined torque demand amount. When the command signal is inputted, the engine control unit 10 controls the electronic control throttle valve 4 so that the throttle opening degree corresponds to the predefined torque demand amount. In this way, the control unit 14 causes the creep torque of the predefined torque demand amount to be generated in the engine 1, and then, ends the creep control (S07).

On the other hand, when it is detected in S03 that the correction execution condition is established, the control unit 14 calculates a correction amount that is obtained by correcting the predefined torque demand amount (S04). Specifically, when it is detected that the engine rotational speed is greater than the target engine rotational speed, the control unit 14 calculates a correction amount that is obtained by correcting the predefined torque demand amount on the basis of the engine rotational speed, the target engine rotational speed and the clutch rotational speed. The control unit 14 calculates, as the correction amount, a value that is corrected so as to reduce the predefined torque demand amount. As indicated by t2, t4 and t6 in Fig. 4, the correction amount is calculated as a value that is obtained by correcting the predefined torque demand amount so as to be further reduced as the deviation between the engine rotational speed and the target engine rotational speed becomes greater.

The control unit 14 outputs a command signal to the engine control unit 10 so as to execute the engine torque control based on the correction amount. When the command signal is inputted, the engine control unit 10 controls the electronic control throttle valve 4 so that the throttle opening degree corresponds to the correction amount (S05). In this way, the control unit 14 causes the creep torque of the correction amount to be generated in the engine 1, and then, ends the creep control (S07). The clutch control unit 11 causes the clutch 2 to be slip-engaged (semi-connected state). Thus, the clutch control unit 11 transmits the creep torque generated in the engine 1 to the driving wheel 9, thereby assisting the start of the vehicle.

Thus, in the case where the engine rotational speed is greater than the target engine rotational speed at the time of the execution of the creep control, the drive control device 13 calculates the correction amount corrected so as to reduce the predefined torque demand amount and controls the electronic control throttle valve 4 of the engine 1 so that the throttle opening degree corresponds to the correction amount. In this way, the blowing up of the engine rotational speed is suppressed.

Thereby, the drive control device 13 can suppress an increase in the engine rotational speed due to excessive torque up of the engine 1 at the time of the execution of the creep control, so that a stable fuel consumption performance and drivability can be secured.

### Reference Numerals

- 1: Engine
- 2: Clutch
- 3: AMT (Automated Manual Transmission)
- 4: Electronic Control Throttle Valve
- 5: First Actuator
- 6: Second Actuator
- 7: Differential
- 8: Drive Axle
- 9: Driving Wheel
- 10: Engine Control Unit
- 11: Clutch Control Unit
- 12: Transmission Control Unit
- 13: Drive Control Device
- 14: Control Unit
- 15: Engine Rotational Speed Detection Unit
- 16: Target Engine Rotational Speed Calculation Unit
- 17: Brake Switch
- 18: Clutch Rotational Speed Detection Unit

## Claims

1. A drive control device (13) for executing a creep control based on a torque demand amount of a creep torque that comprises a torque for starting a vehicle, the drive control device (13) comprising:
a control unit (14) configured to increase a torque of an engine of the vehicle based on a predefined torque demand amount to execute the creep control when a request for actuation of the creep control is detected; and
a detection unit (15) configured to detect the engine rotational speed of the vehicle,
wherein the control unit (14) is configured to, when the engine rotational speed detected by the detection unit (15), at a time when an OFF signal of a brake actuation is received, is greater than a target engine rotational speed, start, after reducing the predefined torque demand amount in accordance with a deviation between the engine rotational speed at the time when the OFF signal of the brake actuation is received and the target rotational speed to obtain a correction amount, the creep control based on the correction amount.

## Patentansprüche

1. Eine Antriebssteuerungsvorrichtung (13) zum Ausführen einer Kriechsteuerung auf Basis einer Drehmomentanforderungsgröße eines Kriechmoments, das ein Drehmoment zum Starten eines Fahrzeugs umfasst, wobei die Antriebssteuerungsvorrichtung (13) aufweist:
eine Steuereinheit (14), die konfiguriert ist, um ein Drehmoment einer Antriebsmaschine des Fahrzeugs auf Basis einer vordefinierten Drehmomentanforderungsgröße zu erhöhen, um die Kriechsteuerung auszuführen, wenn eine Anforderung für eine Betätigung der Kriechsteuerung erfasst wird, und
eine Erfassungseinheit (15), die konfiguriert ist, um die Antriebsmaschinenrotationsgeschwindigkeit des Fahrzeugs zu erfassen,
wobei die Steuereinheit (14) konfiguriert ist, um, wenn die durch die Erfassungseinheit (15) erfasste Antriebsmaschinenrotationsgeschwindigkeit zu einer Zeit, wenn ein OFF-Signal einer Bremsbetätigung empfangen wird, größer ist als eine Ziel-Antriebsmaschinenrotationsgeschwindigkeit, nachdem die vordefinierte Drehmomentanforderungsgröße gemäß einer Abweichung zwischen der Antriebsmaschinenrotationsgeschwindigkeit zu der Zeit, wenn das OFF-Signal der Bremsbetätigung empfangen wird, und der Ziel-Rotationsgeschwindigkeit zum Erhalten einer Korrekturgröße verringert wurde, die Kriechsteuerung auf Basis der Korrekturgröße zu starten.

## Revendications

1. Dispositif (13) de commande d'entraînement pour exécuter une commande de patinage reposant sur une valeur exigée d'un couple de patinage, qui comprend un couple pour faire démarrer un véhicule, le dispositif (13) de commande d'entraînement comprenant :
une unité (14) de commande configurée pour augmenter un couple d'un moteur du véhicule sur la base d'un montant de couple exigé défini à l'avance pour exécuter la commande de patinage, lorsqu'une demande d'actionnement de la commande de patinage est détectée, et
une unité (15) de détection configurée pour détecter la vitesse de rotation du moteur du véhicule,
dans lequel l'unité (14) de commande est configurée pour, lorsque la vitesse de rotation du moteur, détectée par l'unité (15) de détection à l'instant où un signal de mise hors service d'un actionnement de frein est reçu, est plus grande qu'une vitesse cible de rotation du moteur, lancer, après réduction de la valeur exigée du couple définie à l'avance, en fonction d'un écart entre la vitesse de rotation du moteur, à l'instant où le signal d'arrêt de l'actionnement du frein est reçu, et la vitesse de rotation cible pour obtenir une valeur de correction, la commande de patinage reposant sur la valeur de correction.
